# EUROPÄISCHE PATENTSCHRIFT

(11) **EP 0 881 973 B1**
(45) Veröffentlichungstag und Bekanntmachung des Hinweises auf die Patenterteilung: **18.06.2003**
(21) Anmeldenummer: 97949972.0
(22) Anmeldetag: 28.11.1997
(51) Int. Cl.: B60T 8/00

(54) **VERFAHREN UND VORRICHTUNG ZUR EINSTELLUNG DER BREMSWIRKUNG BEI EINEM FAHRZEUG**
PROCESS AND DEVICE FOR ADJUSTING THE BRAKING EFFECT IN A VEHICLE
PROCEDE ET DISPOSITIF D'AJUSTEMENT DE L'EFFET DE FREINAGE DANS UN VEHICULE

(30) Priorität: 02.12.1996 DE 19649825
(43) Veröffentlichungstag der Anmeldung: 09.12.1998
(73) Patentinhaber: ROBERT BOSCH GMBH, 70442 Stuttgart (DE)
(72) Erfinder: SCHMIDT, Günther, D-97941 Tauberbischofsheim (DE)
(86) Internationale Anmeldenummer: DE9702783
(87) Internationale Veröffentlichungsnummer: WO98024667

(56) Entgegenhaltungen:
- EP-A- 0 226 077
- DE-A- 3 627 550
- GB-A- 2 276 687
- US-A- 5 346 293

## Beschreibung

### Stand der Technik

Die Erfindung geht aus von einem Verfahren und einer Vorrichtung zur Einstellung der Bremswirkung bei einem Fahrzeug mit den Merkmalen der Oberbegriffe der unabhängigen Ansprüche.

Aus dem Stand der Technik sind vielerlei Möglichkeiten bekannt, der Blockierneigung eines gebremsten Rades entgegenzuwirken, indem man beispielsweise die Bremskraft im Sinne einer Individual-Regelung an jedem Rad manipuliert. Zu einer solchen Individual-Regelung ist allerdings für jedes Rad eine Möglichkeit vorzusehen, die Bremswirkung an diesem Rad individuell beziehungsweise getrennt von den anderen Rädern vorzunehmen. Solche Systeme sehen im Falle einer hydraulisch wirkenden Bremse für jede individuell zu regelnde Radbremse einen Regelungskanal mit den entsprechenenden hydraulischen Komponenten vor. Beispielhaft für Antiblockiersystemen soll hier auf Bosch Technische Berichte, Band 7 (1980) Heft 2 hingewiesen werden.

Neben solchen Bremssystemen ist aber auch bekannt, die Bremswirkung an mehreren Räder eines Fahrzeugs gemeinsam zu regeln beziehungsweise zu steuern. Aus der DE,C2,22 43 260 (entspricht der US 3,907,378) ist es beispielsweise bekannt, die Bremswirkung an den Radbremsen der Räder einer Achse im Sinne einer Blockierverhinderung gemeinsam einzustellen. Da die Räder einer Achse auf Fahrbahnteilen mit sehr unterschiedlichen Fahrbahn/Reifen-Reibwerten abrollen können, muß notwendigerweise vorgegeben werden, welches der gemeinsam zu regelnden Räder die gemeinsame Bremswirkung vorgibt. In diesem Zusammenhang ist es bekannt, zu einer gemeinsamen Einstellung der Bremswirkung an den beiden Rädern einer Achse zwei Betriebsmodi vorzusehen.

In dem einen Betriebsmodus, dem sogenannten Select-Low-Modus, wird die gemeinsame Einstellung der Bremswirkung, im allgemeinen des Bremsdrucks, abhängig von dem Rad mit dem geringeren Fahrbahn/Reifen-Reibwert getätigt. Im Select-Low-Modus an einer Achse wird also der Bremsdruck an den Radbremsen dieser Achse derart eingestellt, daß das Rad mit dem kleineren Fahrbahn/Reifen-Reibwert von beiden Rädern, das Low-Rad, im optimalen Schlupf betrieben wird. Damit wird erreicht, daß das Rad mit dem größeren Fahrbahn/Reifen-Reibwert, das High-Rad, unterbremst ist und stabil (kein übermäßiger Bremsschlupf) läuft, damit aber auch große Seitenführungskräfte aufnehmen kann.

Im sogenannten Select-High-Modus wird die gemeinsame Einstellung der Bremswirkung, im allgemeinen des Bremsdrucks, abhängig von dem Rad mit dem höheren Fahrbahn/Reifen-Reibwert getätigt wird. Im Select-High-Modus an einer Achse wird also der Bremsdruck an den Radbremsen dieser Achse derart eingestellt, daß das Rad mit dem größeren Fahrbahn/Reifen-Reibwert von beiden Rädern im optimalen Schlupf betrieben wird. Damit wird erreicht, daß das Rad mit dem niedrigeren Fahrbahn/Reifen-Reibwert überbremst ist und gegebenenfalls sogar blockiert und dann nur wenig oder gar keine Seitenführungskräfte aufnehmen kann. Der Vorteil des Select-High-Modus besteht aber darin, daß das Fahrzeug einen relativ kurzen Bremsweg aufweist.

Der DE,C2,22 43 260 ist dazu zu entnehmen, die Zeitdauer, während der auf den Select-High-Modus umgeschaltet wird, von der Fahrzeuggeschwindigkeit und/oder von der Fahrzeugverzögerung derart abhängig zu machen, daß mit kleiner werdender Fahrzeuggeschwindigkeit beziehungsweise Fahrzeugverzögerung die Zeitdauer ansteigt.

Ebenso ist es aus der auf der DE,C2,22 43 260 erwähnten US 3,535,004 bekannt, eine Umschaltung auf den Select-High-Modus immer dann vorzusehen, wenn das Fahrzeug sich auf einem Untergrund mit Reibkoeffizienten bewegt, die auf der rechten und linken Fahrzeugseite wesentlich unterschiedliche Werte aufweisen.

Darüber hinaus ist es bekannt, daß bei einem sogenannten 2-Kanal-ABS (Bremswirkungen an der Vorder- und Hinterachse werden gemeinsam geregelt) beziehungsweise 3-Kanal-ABS (Bremswirkungen an der der Hinterachse werden gemeinsam geregelt, an der Vorderachse ist eine individuelle Einstellung der Bremswirkung möglich) die Bremswirkung an der Hinterachse nach dem Select-Low-Modus eingestellt wird.

Die EP 0 226 077 A2 zeigt ein Antiblockiersystem für Fahrzeuge, bei dem vom Betriebsmodus "Select-high-Betrieb" auf den Betriebsmodus "Select-low-Betrieb" dann umschaltet wird, wenn wenigstens ein Teil der mit den Drehanzeiger ausgerüsteten Rädern anzeigt, dass diese keine oder nur eine sehr geringe Drehgeschwindigkeit aufweisen. Eine Select-low-Regelung wird dann gewünscht, wenn die Reibwerte an den Rädern beider Fahrzeugseiten nicht stark voneinander abweichen und auch, wenn der vom Fahrer eingesteuerte Druck nahe dem Druck liegt, bei dem das Low-Rad zu blockieren beginnt. Die Regelkriterien können aus Druckmessungen, aber auch aus den Ansteuerzeiten der Ventile abgeleitet werden. Ist eine der Regelungsarten wirksam gemacht, so wird von Zeit zu Zeit geprüft, ob die Verhältnisse, die zur Einschaltung dieser Regelungsart führten, noch vorliegen.

Die Aufgabe der vorliegenden Erfindung besteht darin, ein 'Bremssystem mit einer gemeinsamen Einstellung der Bremswirkung an den Rädern wenigstens einer Achse möglichst fahrsicher zu gestalten.

Diese Aufgabe wird durch die-kennzeichnenden Merkmale der unabhängigen Ansprüche gelöst.

### Vorteile der Erfindung

Wie erwähnt geht die Erfindung aus von einem System zur Einstellung der Bremswirkung bei einem Fahrzeug im Sinne der Vermeidung einer Blockiertendenz mit wenigstens zwei bzgl. der Fahrtrichtung rechts und links an einer Achse angeordneten Rädern, die auf einer unterschiedliche Reibwerte aufweisenden Fahrbahn abrollen und deren Bewegungsverhalten erfaßt wird. Die Bremswirkung an den beiden Rädern wird dabei gemeinsam eingestellt, wobei zwei Betriebsmodi vorgesehen sind, die abhängig von den vorliegenden Reibwerten an den Rädern und/oder abhängig von der Fahrzeuggeschwindigkeit wählbar sind. In dem ersten wählbaren Betriebsmodus (select low) wird die gemeinsame Einstellung abhängig von dem erfaßten Bewegungsverhalten des Rades mit dem geringeren Reibwert getätigt, während in einem zweiten wählbaren Betriebsmodus (select high) die gemeinsame Einstellung abhängig von dem erfaßten Bewegungsverhalten des Rades mit dem höheren Reibwert geschieht. Dabei wird das Ausmaß der Reibwertunterschiede zwischen den wenigstens zwei bzgl. der Fahrtrichtung rechts und links an einer Achse angeordneten Rädern ermittelt. Die Wahl eines Betriebsmodus geschieht abhängig von dem Ausmaß der Reibwertunterschiede.

Der Kern der Erfindung in der ersten Ausgestaltungsvariante besteht darin, daß das Ausmaß der vorliegenden Reibwerte der wenigstens zwei bzgl. der Fahrtrichtung rechts und links an einer Achse angeordneten Räder erfasst wird. Bei Vorliegen von Reibwertunterschieden vorgebbar geringeren Ausmaßes geschieht die Wahl eines Betriebsmodus abhängig von dem Ausmaß der vorliegenden Reibwerte.

Der Kern der Erfindung in der zweiten Ausgestaltungsvariante, die alternativ oder ergänzend zur ersten Ausführungsform gewählt werden kann, besteht darin, daß bei Vorliegen von Reibwertunterschieden vorgebbar größeren Ausmaßes die Wahl eines Betriebsmodus abhängig von der erfaßten Fahrzeuggeschwindigkeit geschieht.

Dies kann bedeuten, daß die Differenz der momentan vorliegenden Reibwerte der Fahrbahn auf der rechten und linken Fahrzeugseite ermittelt werden. Unterschreitet diese Differenz einen vorgebbaren Schwellwert, so geschieht die Wahl eines Betriebsmodus abhängig von dem Ausmaß der vorliegenden Reibwerte. Alternativ oder ergänzend hierzu kann vorgesehen sein, daß bei einer Überschreitung des Schwellwertes die Wahl eines Betriebsmodus abhängig von der erfaßten Fahrzeuggeschwindigkeit vorgenommen wird.

Durch die Erfindung gelangt man, insbesondere bei der Verwendung in einem 2 Kanal Bremssystem, zu einem fahrsicherheitssteigernden aber einfach und kostengünstig ausgelegten Bremssystem.

Insbesondere ist es erfindungsgemäß vorgesehen, daß bei Vorliegen von Reibwertunterschieden geringeren Ausmaßes und bei Vorliegen geringerer Reibwerte der zweite Betriebsmodus (select high), insbesondere für die vordere Achse des Fahrzeugs, gewählt wird. Bei dieser Ausgestaltung der Erfindung wird ein unter Umständen auftretendes Blockieren der Räder, insbesondere eines Vorderrades, in Kauf genommen, um einen kurzen Bremsweg zu erreichen. Die Hinterräder sollten aber vorteilhafterweise im Select-Low-Modus betrieben werden, um eine optimale Seitenführung sicherzustellen. Prinzipiell können aber die Hinterräder auch im Select-High-Modus betrieben werden.

Bei Vorliegen von Reibwertunterschieden geringeren Ausmaßes und bei Vorliegen größerer Reibwerte wird vorteilhafterweise der erste Betriebsmodus (select low), insbesondere für die vordere Achse des Fahrzeugs, gewählt. Wegen der hohen Reibwerte soll in diesem Fall nicht auf einen gute Seitenführung der Räder verzichtet werden.

In einer weiteren vorteilhaften Ausgestaltung ist vorgesehen, daß bei Vorliegen von Reibwertunterschieden größeren Ausmaßes und bei Vorliegen geringerer Fahrzeuggeschwindigkeiten der zweite Betriebsmodus (select high), insbesondere für die vordere Achse des Fahrzeugs, gewählt wird. Bei Vorliegen von Reibwertunterschieden größeren Ausmaßes und bei Vorliegen größerer Fahrzeuggeschwindigkeiten wird dann der erste Betriebsmodus (select low), insbesondere für die vordere Achse des Fahrzeugs, gewählt. Diese Ausgestaltung geht von dem Gedanken aus, daß bei niedrigeren Fahrzeuggeschwindigkeiten zur Optimierung des Bremsweges eine unter Umständen nicht optimale Seitenführung des Vorderrades mit dem niedrigeren Reibwert in Kauf genommen werden kann. Bei höheren Fahrzeuggeschwindigkeiten ist aber auf jeden Fall zur Steigerung des Seitenführung des Vorderräder und damit zur Verbesserung der Lenkfähigkeit der Select-Low-Modus an den Vorderrädern einzustellen. Die Hinterräder sollten aber vorteilhafterweise auch bei dieser Ausführungsform fahrgeschwindigkeitsunabhängig im Select-Low-Modus betrieben werden, um eine optimale Seitenführung an den Hinterrädern und damit stabiles Fahrzeugverhalten sicherzustellen. Prinzipiell können aber die Hinterräder auch im Select-High-Modus betrieben werden.

Das Vorliegen von Reibwertunterschieden geringeren und/oder größeren Ausmaßes kann derart ermittelt werden, daß
- die Drehbewegung jedes Rades erfaßt wird,
- wenigstens abhängig von den erfaßten Radbewegungen die an den Rädern vorliegenden Reibwerte bestimmt werden und
- die Differenz der bestimmten Reibwerte des linken und rechten Rades mit vorgebbaren Schwellwerten verglichen werden.

Dabei ist insbesondere vorgesehen, daß aus den erfaßten Drehbewegungen die Radverzögerung ermittelt wird. Aus der Radverzögerung, insbesondere aus der maximalen Radverzögerung, kann auf den Reibwert geschlossen werden.

Bei Vorliegen von Reibwertunterschieden sehr großen Ausmaßes ist in einer vorteilhaften Ausgestaltung der Erfindung vorgesehen daß der zweite Betriebsmodus (select high), insbesondere für beide Achsen des Fahrzeugs, gewählt wird. Dieser Ausgestaltung liegt die Überlegung zugrunde, daß es bei extrem unterschiedlichen Reibwertunterschieden durch den Select-Low-Modus zu unzulässig langen Bremswegen kommen kann.

Die Wahl eines Betriebsmodus kann erfindungsgemäß mit einer Hysterese versehen sein, damit es bei Vorliegen von geringen Reibwertunterschieden nicht zu einer unmäßig hohen Anzahl von Umschaltungen (Pendelumschaltungen) zwischen den Betriebsmodi kommt.

Weitere vorteilhafte Ausgestaltungen der Erfindung sind den Unteransprüchen zu entnehmen.

### Zeichnung

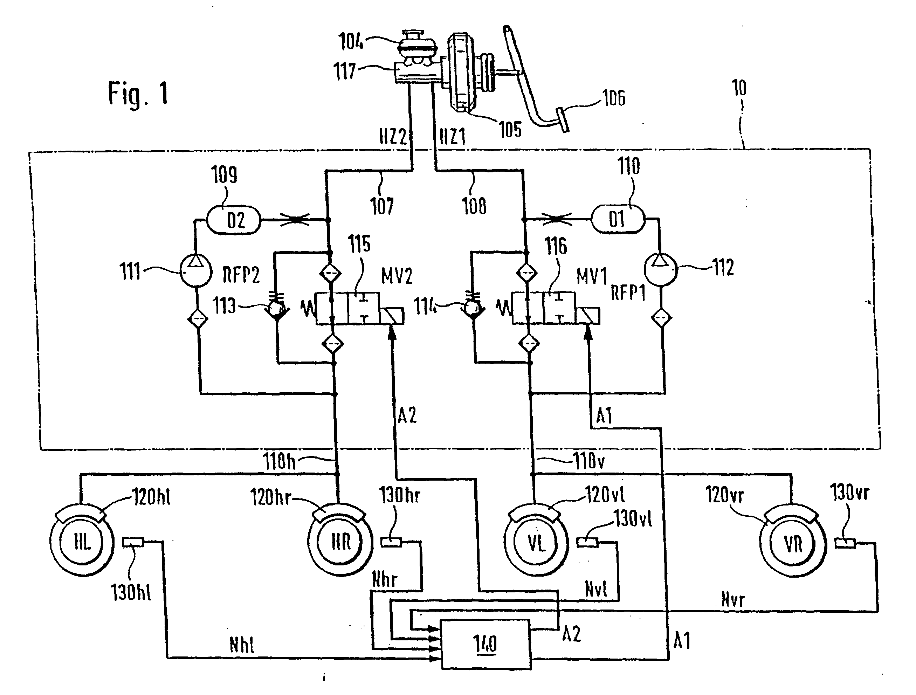

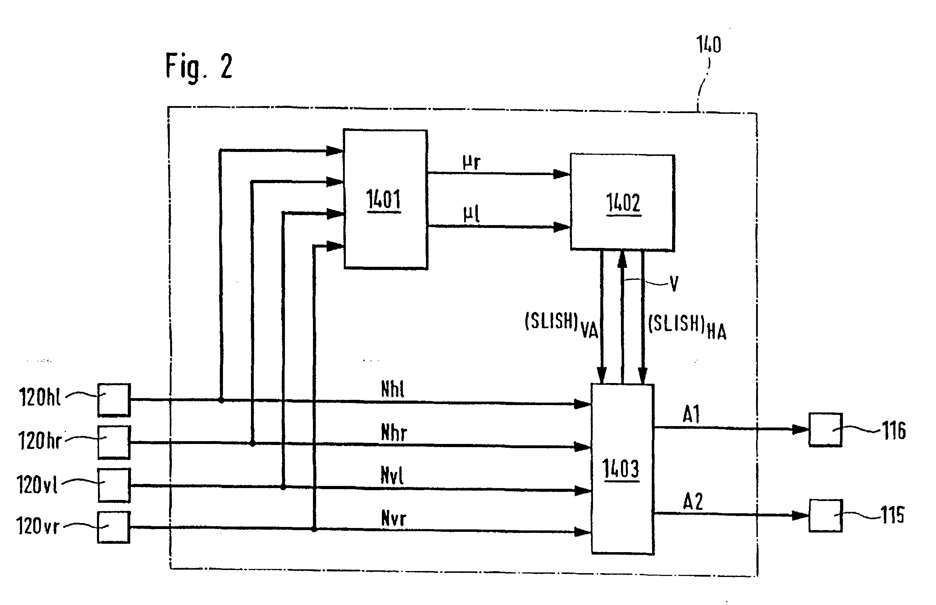

Die Zeichnung zeigt anhand der Figur 1 schematisch ein Blockschaltbild eines 2 Kanal Bremssystems. Die Figur 2 stellt als Blockschaltbild die das Bremssystem steuernde Steuereinheit dar. Die Figur offenbart die erfindungsgemäße Umschaltung zwischen den Betriebsmodi.

### Ausführungsbeispiel

Im folgenden soll die Erfindung anhand eines Ausführungsbeispiels detailliert beschrieben werden.

Die hydraulische Fahrzeugbremsanlage gemäß dem in der Figur 1 gezeigten Blockschaltbild besitzt einen zweikreisigen Hauptbremszylinder 117 mit einem Vorratsbehälter 104 und mit einem Bremspedal 106, das über eine Pedalstange mit dem Bremskraftverstärker 105 verbunden ist. Die beiden Bremskreise HZ2 und HZ1 sind den Bremsen 120hl und 120hr bzw. 120vl und 120vr der Hinter- und Vorderachse eines Fahrzeugs zugeordnet.

Zum Bremskreis HZ1 gehört eine von dem Hauptbremszylinder 117 ausgehende Hauptbremsleitung 108, die zur Blockierschutzeinrichtung 10 führt, sowie eine Radbremsleitung 118v, die von der Blockierschutzeinrichtung 10 ausgeht und zu den Radbremsen 120vl und 120vr der Vorderachse führt. In gleichartiger Weise gehören zu dem Bremskreis HZ2 eine Hauptbremsleitung 107 und eine Radbremsleitung 118h, die zu den Radbremsen 120hl und 120hr der Hinterachse führt.

Die Blockierschutzeinrichtung 10 weist zwei Ventile MV1 und MV2 116 und 115 auf, die in Reihe zu zwei Rückschlagventilen 114 und 113 eingebaut sind. Weiterhin sind zwei Rückförderpumpen RFP1 und RFP2 112 und 111, die einen gemeinsamen, nicht dargestellten Antriebsmotor aufweisen, vorhanden. Zur Verringerung von Druckpulsationen erfolgt die Rückförderung durch zwei Dämpferkammern mit nachgeschalteten Drosseln D2 und D1 (109, 110) in die Hauptbremsleitungen 107, 108.

Die Ventile 115 und 116 sind als 2/2-Wegeventile ausgebildet, die mittels Elektromagneten steuerbar (Ansteuersignale A1 und A2) und bei stromlosen Elektromagneten geöffnet sind. Je nach Stellung der Magnetventile 115 und 116 kann der Bremsdruck gemeinsam für die Radbremsen der Vorderachse einerseits und gemeinsam für die Radbremsen der der Hinterachse andererseits auf- oder abgebaut werden.

Mit den Bezugszeichen 130hl, 130hr, 130vl und 130vr sind an sich bekannte Raddrehzahlsensoren bezeichnet, die die Drehgeschwindigkeit der entsprechenden Räder detektieren und als Signale Nhl, Nhr, Nvl und Nvr an die Steuereinheit 140 weiterleiten. Abhängig von diesen Eingangssignalen berechnet die Steuereinheit 140 die Ansteuersignale A1 und A2 zur Ansteuerung der Magnetventile 115 und 116.

Die genauere Funktionsweise der Steuereinheit 140 soll anhand der Figur 2 dargestellt werden.

In der Steuereinheit 140 werden die Raddrehzahlsignale Nhl, Nhr, Nvl und Nvr, neben dem noch zu beschreibenden Block 1401, dem Block 1403 zugeführt. Hier wird zunächst aus den Raddrehzahlsignale Nhl, Nhr, Nvl und Nvr eine die Fahrzeuglängsgeschwindigkeit repräsentierende Referenzgeschwindigkeit gebildet. Dies kann für die Bremssteuerung im einfachster Weise dadurch geschehen, daß als Referenzgeschwindigkeit die zweitgrößte Raddrehzahl genommen wird (da das Fahrzeug mit einem Notrad mit kleinerem Radhalbmesser bestückt sein kann).

Im Block 1403 wird aus der Referenzgeschwindigkeit und der Raddrehzahl der Bremsschlupf für jedes Rad bestimmt. Aus dem so bestimmten Radschlupf und der Radverzögerung wird, gegebenenfalls unter Berücksichtigung weiterer Größen, ein Instabilitätswert gebildet. Aus der Größe dieses Instabilitätswerts kann auf die Bremsstabilität jedes Rades geschlossen werden. Im Falle der eingangs erwähnten Individualregelung würden die Bremsdrücke in jeder Radbremse derart gesteuert, daß ein stabiler Radbewegungsverlauf erzielt wird, also insbesondere kein übermäßiger Bremsschlupf auftritt.

In Abhängigkeit von dem Erkennen einer Radblockiergefahr an wenigstens einem der Räder bewirkt das Steuergerät 140 ein Einschalten des nicht dargestellten Antriebsmotors und dadurch ein Inbetriebsetzen der Rückförderpumpen RFP1 und RFP2. Weiterhin steuert das Steuergerät 140 wenigstens dasjenige der Ventile MV1/MV2 in die Schließstellung, an dessen zugeordnetem Rad die Radblockiergefahr besteht. Auf diese Weise wird wegen des geschlossenen Ventils MV1/2 durch die in Betrieb befindliche Rückförderpumpe RFP1/2 Druckmittel aus dem Radbremszylinder zurückfördert zum Hauptbremszylinder 117. Infolgedessen sinkt innerhalb dem Radbremszylinder der Bremsdruck, die Bremswirkung läßt nach und die Blockiergefahr wird vermindert. Ist die Radblockiergefahr ausreichend vermindert, dann wird das entsprechende Ventil MV1/2 geöffnet, so daß es wieder seine Ausgangsstellung einnimmt, mit der Folge, daß ein infolge der vorangegangenen Bremsdruckabsenkung vorhandener Druckunterschied zwischen dem Hauptbremszylinder und dem Radbremszylinder kleiner wird.

Da nun wegen der eingeschränkten hydraulischen Ausgestaltung nur eine gemeinsame Bremsdrucksteuerung der beiden Achsen möglich ist, wird, wie eingangs beschrieben, der Bremsdruck an den Achsen entweder derart eingestellt, daß entweder im Select-Low-Modus die Stabilität des Rades mit dem kleineren Fahrbahn/Reifen-Reibwert oder im Selct-High-Modus die Stabilität des Rades mit dem größeren Fahrbahn/Reifen-Reibwert im Vordergrund steht. Zur Unterscheidung, welcher der beiden Modi an welcher Achse einzustellen ist, werden dem Block 1403 die beiden Signal (SL/SH)_{VA} und (SL/SH)_{HA} von dem Block 1402 zugeführt. Diese Signale können dabei jeweils zwei Werte annehmen, je nachdem, ob
- an der Vorderachse der Select-Low-Modus (Signal SL_{VA}),
- an der Vorderachse der Select-High-Modus (Signal SH_{VA}),
- an der Hinterachse der Select-Low-Modus (Signal SL_{HA}) oder
- an der Hinterachse der Select-High-Modus (Signal SH_{HA}) eingestellt werden soll.

Zur Bestimmung, welcher Betriebsmodus momentan eingestellt werden soll, werden dem Block 1401 die Raddrehzahlsignale Nhl, Nhr, Nvl und Nvr zugeleitet. Im Block 1401 werden durch Differenzieren die Radverzögerungswerte berechnet. Da die maximal mögliche Radverzögerung ein direktes Maß für den momentan vorliegenden Reibwert zwischen Reifen und Fahrbahn darstellt, kann aus der maximalen Radverzögerung der rechten und linken Räder der Reibwert µᵣ für die rechte Fahrzeughälfte und der Reibwert µₗ für die linke Fahrzeughälfte bestimmt werden. Diese Werte werden dem Block 1402 zugeführt

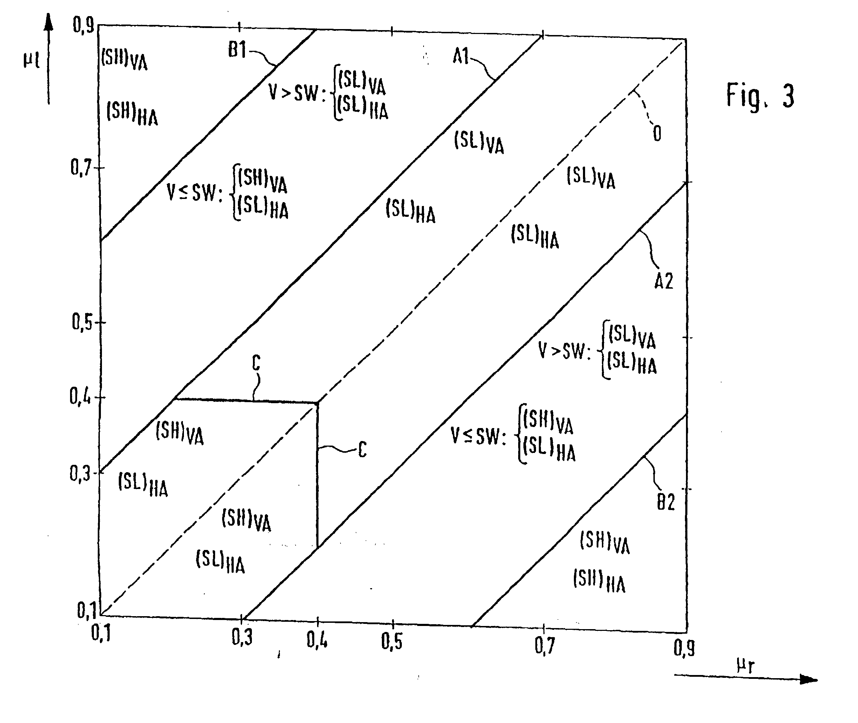

Im Block 1402 werden die Reibwerte µₗ und µᵣ miteinander verglichen, woraufhin je nach Vergleichergebnis, je nach Größe der Reibwerte und gegebenenfalls je nach Größe der momentanen Fahrzeuggeschwindigkeit V die Signale (SL/SH)_{VA} und (SL/SH)_{HA} gebildet werden. Die Bildung dieser Signale ist anhand des in der Figur 3 gezeigten Diagramms verdeutlicht.

In der Figur 3 ist anhand eines Kennfeldes die Wahl der Betriebsmodi abhängig von den Reibwerten µₗ und µᵣ auf der linken und rechten Fahrzeugseite dargestellt. Im Bereich der Linie 0 gibt es keine wesentlichen Unterschiede zwischen den Reibwerten, das Fahrzeug bewegt sich auf einer homogenen Fahrbahnoberfläche. Im Bereich zwischen den Linien A1 und A2 sind die Unterschiede zwischen den Reibwerte µₗ und µᵣ auf der linken und rechten Fahrzeugseite innerhalb bestimmter Grenzen. In diesem Bereich kann also die Fahrbahnoberfläche im eingeschränkten Maße inhomogen sein. Befinden sich die momentane Reibwerte in diesem Bereich (zwischen A1 und A2) und sind diese Reibwerte nicht allzu groß (Bereich unterhalb der Linie C), so werden durch Abgeben der Signale SH_{VA} und SL_{HA} die Radbremsen der Vorderachse im Select-High-Modus und die der Hinterachse im Select-Low-Modus betrieben. In diesem Bereich wird ein unter Umständen auftretendes Blockieren eines Vorderrades in Kauf genommen, um einen kurzen Bremsweg zu erreichen. Die Antiblockierregelung an den Hinterräder wird aber im Select-Low-Modus betrieben, um eine optimale Seitenführung für ein stabiles Fahrverhalten sicherzustellen.

Nehmen die Reibwerte im Bereich zwischen A1 und A2 jedoch größere Werte (oberhalb der Linie C) an, so wird der Select-Low-Modus an beiden Achsen gewählt. Wegen der hohen Reibwerte soll in diesem Fall nicht auf einen gute Seitenführung aller Räder verzichtet werden.

Unterscheiden sich die Reibwerte µₗ und µᵣ auf der linken und rechten Fahrzeugseite markant (Bereich zwischen den Linien B1 und A1 beziehungsweise A2 und B2), so wird die Wahl der Modi abhängig von der Fahrzeuglängsgeschwindigkeit V ausgewählt. Als Fahrzeuglängsgeschwindigkeit V kann dem Block 1402 die im Block 1402 zur Bremsschlupfbestimmung benötigte Fahrzeugreferenzgeschwindigkeit zugeleitet werden.

Ist die Fahrzeuggeschwindigkeiten V kleiner als ein wählbarer Schwellwert SW oder gleich diesem Schwellwert SW, so wird in dem Bereich zwischen den Linien B1 und A1 beziehungsweise A2 und B2 der Select-High-Betriebsmodus für die Radbremsen der vorderen Achse des Fahrzeugs gewählt wird. In dem Bereich geringerer Geschwindigkeit kann dem kürzeren Bremsweg eine höhere Priorität eingeräumt werden als der Seitenführung des Low-Rades.

Ist die Fahrzeuggeschwindigkeiten V jedoch größer als ein wählbarer Schwellwert SW, so wird in dem Bereich zwischen den Linien B1 und A1 beziehungsweise A2 und B2 der Select-Low-Betriebsmodus für die Radbremsen der vorderen Achse des Fahrzeugs gewählt wird. In dem Bereich höherer Geschwindigkeit wird also der Seitenführung des Low-Rades eine höhere Priorität eingeräumt als dem kürzeren Bremsweg.

Unabhängig von der Fahrzeuggeschwindigkeit wird aber im Bereich zwischen A1 und B1 beziehungsweise A2 und B2 die Antiblockierregelung an den Hinterräder im Select-Low-Modus betrieben, um eine optimale Seitenführung sicherzustellen.

Liegen Reibwertunterschiede sehr großen Ausmaßes vor (Bereich oberhalb B1 und unterhalb B2), so wird sowohl an der Hinterachse als auch an der Vorderachse der Select-High-Modus gewählt. Dies ist dadurch zu begründen, daß ein Select-Low-Betrieb des Antiblockiersystems bei sehr unterschiedlichen Reibwerten auf der rechten und linken Fahrzeugseite zu einem sehr langen Bremsweg führen würde, da das Rad mit dem hohen Reibwert, das High-Rad, ständig stark unterbremst würde.

Bei dem anhand der Figur 3 gezeigten Ausführungsbeispiel geschieht die Wahl der Betriebsmodi des Antiblockiersystems für die Vorder- und Hinterachse abhängig von den Reibwerten µᵣ und µₗ der rechten und linken Fahrzeugseite. Selbstverständlich kann vorgesehen sein, daß die Wahl der Betriebsmodi für jede Achse separat abhängig von den Reibwertunterschieden an der jeweiligen Achse beziehungsweise abhängig von der vorliegenden Fahrgeschwindigkeit getätigt wird.

Weiterhin kann vorgesehen sein, daß das fahrgeschwindigkeits- bzw. reibwertabhängige Umschalten zwischen den Betriebsmodi mit einer Hysterese versehen ist. Mit einer solchen Hysterese werden bei Vorliegen von geringen Schwankungen der Reibwertunterschiede beziehungsweise geringen Schwankungen der Fahrzeuggeschwindigkeit um den Schwellwert SW eine unmäßig hohe Anzahl von Umschaltungen (Pendelumschaltungen) zwischen den Betriebsmodi vermieden.

## Patentansprüche

1. Verfahren zur Einstellung der Bremswirkung bei einem Fahrzeug im Sinne der Vermeidung einer Blockiertendenz mit wenigstens zwei bzgl. der Fahrtrichtung rechts und links an einer Achse angeordneten Rädern (120ij), die auf einer unterschiedliche Reibwerte (µᵣ, µₗ) aufweisenden Fahrbahn abrollen und deren Bewegungsverhalten erfaßt wird, und mit einer gemeinsamen Einstellung (115, 116) der Bremswirkung an den beiden Rädern mit zwei Betriebsmodi (SL, SH), die abhängig von den vorliegenden Reibwerten an den Rädern und/oder abhängig von der Fahrzeuggeschwindigkeit wählbar sind, wobei in einem ersten wählbaren Betriebsmodus (select low, SL) die gemeinsame Einstellung abhängig von dem erfaßten Bewegungsverhalten des Rades mit dem geringeren Reibwert und in einem zweiten wählbaren Betriebsmodus (select high, SH) die gemeinsame Einstellung abhängig von dem erfaßten Bewegungsverhalten des Rades mit dem höheren Reibwert geschieht, wobei das Ausmaß der Reibwertunterschiede zwischen den wenigstens zwei bzgl. der Fahrtrichtung rechts und links an einer Achse angeordneten Rädern (120ij) ermittelt wird und die Wahl eines Betriebsmodus (SL, SH) abhängig von dem Ausmaß der Reibwertunterschiede geschieht, **dadurch gekennzeichnet, dass**
- das Ausmaß der vorliegenden Reibwerte (µᵣ, µₗ) der wenigstens zwei bzgl. der Fahrtrichtung rechts und links an einer Achse angeordneten Räder (120ij) erfasst wird und bei Vorliegen von Reibwertunterschieden vorgebbar geringeren Ausmaßes die Wahl eines Betriebsmodus (SL, SH) abhängig von dem Ausmaß der vorliegenden Reibwerte (µᵣ, µₗ) geschieht und/oder
- bei Vorliegen von Reibwertunterschieden vorgebbar größeren Ausmaßes die Wahl eines Betriebsmodus abhängig von der erfaßten Fahrzeuggeschwindigkeit (V) geschieht.

2. Verfahren nach Anspruch 1, **dadurch gekennzeichnet, daß** bei Vorliegen von Reibwertunterschieden geringeren Ausmaßes und bei Vorliegen geringerer Reibwerte der zweite Betriebsmodus (select high, SH), insbesondere für die vordere Achse des Fahrzeugs, gewählt wird und bei Vorliegen von Reibwertunterschieden geringeren Ausmaßes und bei Vorliegen größerer Reibwerte der erste Betriebsmodus (select low, SL), insbesondere für die vordere Achse des Fahrzeugs, gewählt wird.

3. Verfahren nach Anspruch 1, **dadurch gekennzeichnet, daß** bei Vorliegen von Reibwertunterschieden größeren Ausmaßesund bei Vorliegen geringerer Fahrzeuggeschwindigkeiten der zweite Betriebsmodus (select high), insbesondere für die vordere Achse des Fahrzeugs, gewählt wird und bei Vorliegen von Reibwertunterschieden größeren Ausmaßes und bei Vorliegen größerer Fahrzeuggeschwindigkeiten (V) der erste Betriebsmodus (select low, SL), insbesondere für die vordere Achse des Fahrzeugs, gewählt wird.

4. Verfahren nach Anspruch 1, **dadurch gekennzeichnet, daß** das Vorliegen von Reibwertunterschieden geringeren und/oder größeren Ausmaßes derart ermittelt wird, daß
- die Drehbewegungen (Nij) der Räder (120ij) erfaßt werden,
- wenigstens abhängig von den erfaßten Radbewegungen, insbesondere abhängig von den aus den erfaßten Drehbewegungen abgeleiteten maximalen Radverzögerungen, die an den Rädern vorliegenden Reibwerte bestimmt werden und
- die Differenz der bestimmten Reibwerte des linken und rechten Rades mit vorgebbaren Schwellwerten verglichen werden.

5. Verfahren nach Anspruch 1, **dadurch gekennzeichnet, daß** bei Vorliegen von Reibwertunterschieden sehr großen Ausmaßes der zweite Betriebsmodus (select high, SH), insbesondere für die vordere und hintere Achse des Fahrzeugs, gewählt wird.

6. Verfahren nach Anspruch 1, **dadurch gekennzeichnet, daß** Wahl der Betriebsmodi mit Hystersen versehen ist.

7. Vorrichtung zur Einstellung der Bremswirkung bei einem Fahrzeug mit wenigstens zwei bzgl. der Fahrtrichtung rechts und links an wenigstens einer Achse angeordneten Rädern (120ij), die unterschiedliche Reibwerte aufweisen können, und mit
- Mitteln (120ij) zur Erfassung der Bewegungsverhalten der Räder,
- Mitteln (115, 116) zur gemeinsamen Einstellung der Bremswirkung an den beiden Rädern,
- Steuermitteln (140) zur Bildung von Ansteuersignalen (A1, A2) zur Ansteuerung der Mittel (140) zur gemeinsamen Einstellung mit wenigstens zwei Betriebsmodi (SH, SL), die abhängig von den vorliegenden Reibwerten (µᵣ, µₗ) an den Rädern und/oder abhängig von der Fahrzeuggeschwindigkeit (V) wählbar sind, wobei in einem ersten wählbaren Betriebsmodus (select low SL) die gemeinsame Einstellung abhängig von dem erfaßten Bewegungsverhalten des Rades mit dem geringeren Reibwert und in einem zweiten wählbaren Betriebsmodus (select high, SH) die gemeinsame Einstellung abhängig von dem.erfaßten Bewegungsverhalten des Rades mit dem höheren Reibwert geschieht, die Steuermittel (140) derart ausgestaltet sind, dass das Ausmaß der Reibwertunterschiede zwischen den wenigstens zwei bzgl. der Fahrtrichtung rechts und links an einer Achse angeordneten Rädern (120ij) ermittelt wird und die Wahl eines Betriebsmodus (SL, SH) abhängig von dem Ausmaß der Reibwertunterschiede geschieht, **dadurch gekennzeichnet, dass**
die Steuermittel (140) weiterhin derart ausgestaltet sind, dass
- das Ausmaß der vorliegenden Reibwerte (µᵣ, µₗ) der wenigstens zwei bzgl. der Fahrtrichtung rechts und links an einer Achse angeordneten Räder (120ij) erfasst wird und bei Vorliegen von Reibwertunterschieden vorgebbar geringeren Ausmaßes die Wahl eines Betriebsmodus (SL, SH) abhängig von dem Ausmaß der vorliegenden Reibwerte (µᵣ, µₗ) geschieht und/oder
- bei Vorliegen von Reibwertunterschieden vorgebbar größeren Ausmaßes die Wahl eines Betriebsmodus abhängig von der erfaßten Fahrzeuggeschwindigkeit (V) geschieht.

8. Vorrichtung nach Anspruch 7, **dadurch gekennzeichnet, daß** die Steuermittel (140) derart ausgestaltet sind, daß bei Vorliegen von Reibwertunterschieden geringeren Ausmaßes und bei Vorliegen geringerer Reibwerte der zweite Betriebsmodus (select high, SH), insbesondere für die vordere Achse des Fahrzeugs, gewählt wird und bei Vorliegen von Reibwertunterschieden geringeren Ausmaßes und bei Vorliegen größerer Reibwerte der erste Betriebsmodus (select low, SL), insbesondere für die vordere Achse des Fahrzeugs, gewählt wird.

9. Vorrichtung nach Anspruch 7, **dadurch gekennzeichnet, daß** die Steuermittel (140) derart ausgestaltet sind, daß bei Vorliegen von Reibwertunterschieden größeren Ausmaßes und bei Vorliegen geringerer Fahrzeuggeschwindigkeiten der zweite Betriebsmodus (select high, SH), insbesondere für die vordere Achse des Fahrzeugs, gewählt wird und bei Vorliegen von Reibwertunterschieden größeren Ausmaßes und bei Vorliegen größerer Fahrzeuggeschwindigkeiten der erste Betriebsmodus (select low, SL), insbesondere für die vordere Achse des Fahrzeugs, gewählt wird.

10. Vorrichtung nach Anspruch 7, **dadurch gekennzeichnet, daß** zur Ermittlung des Vorliegens von Reibwertunterschieden geringeren und/oder größeren Ausmaßes vorgesehen sind:
- Mittel (130ij) zur Erfassung der Drehbewegung (Nij) jedes Rades,
- Mittel (140, 1401) zur Bestimmung der an den Rädern vorliegenden Reibwerte wenigstens abhängig von den erfaßten Radbewegungen, insbesondere abhängig von den aus den erfaßten Drehbewegungen abgeleiteten maximalen Radverzögerungen, und
- Mittel (140, 1402) zum Vergleich der Differenz der bestimmten Reibwerte des linken und rechten Rades mit vorgebbaren Schwellwerten.

## Claims

1. Method for setting the braking action, in the sense of avoiding a tendency to lock, in a vehicle having at least two wheels (120ij) arranged on an axle, to the right and left relative to the direction of travel, said wheels roll on a roadway having different coefficient of friction (µᵣ, µₗ) and their movement behaviour being sensed, and having a joint setting (115, 116) of the braking action at the two wheels with two operating modes (SL, SH) which can be selected as a function of the prevailing coefficients of friction at the wheels and/or as a function of the vehicle speed, the joint setting taking place in a first selectable operating mode (select low, SL) as a function of the sensed movement behaviour of the wheel having the lower coefficient of friction, and the joint setting taking place in a second selectable operating mode (select high, SH) as a function of the sensed movement behaviour of the wheel having the higher coefficient of friction, the extent of the differences between the coefficients of friction at the at least two wheels (120ij) arranged on the right and left of an axle relative to the direction of travel being determined and an operating mode (SL, SH) being selected as a function of the extent of the differences between the coefficients of friction, **characterized in that**
- the extent of the prevailing coefficients of friction (µᵣ, µₗ) of the at least two wheels (120ij) arranged on the right and left of an axle relative to the direction of travel is sensed and, if differences between coefficients of friction of a prescribably lesser extent are present, an operating mode (SL, SH) is selected as a function of the prevailing coefficients of friction (µᵣ, µₗ), and/or,
- if differences between coefficients of friction of a prescribably greater extent are present, an operating mode is selected as a function of the sensed vehicle speed (V).

2. Method according to Claim 1, **characterized in that**, if differences between coefficients of friction of a lesser extent are present and if relatively low coefficients of friction are present, the second operating mode (select high, SH) is selected, in particular for the front axle of the vehicle, and, if differences between coefficients of friction of a lesser extent are present and if relatively high coefficients of friction are present, the first operating mode (select low, SL) is selected, in particular for the front axle of the vehicle.

3. Method according to Claim 1, **characterized in that**, if differences between coefficients of friction of a greater extent are present and if relatively low vehicle speeds are present, the second operating mode (select high) is selected, in particular for the front axle of the vehicle, and, if differences between coefficients of friction of a greater extent are present and if relatively high vehicle speeds (V) are present, the first operating mode (select low, SL) is selected, in particular for the front axle of the vehicle.

4. Method according to Claim 1, **characterized in that** the presence of differences between coefficients of friction of a lesser and/or greater extent is determined in such a way that
- the rotational movements (Nij) of the wheels (120ij) are sensed,
- the coefficients of friction prevailing at the wheels are determined at least as a function of the sensed wheel movements, in particular as a function of the maximum wheel decelerations derived from the sensed rotational movements, and
- the difference between the determined coefficients of friction of the left and right wheels is compared with prescribable threshold values.

5. Method according to Claim 1, **characterized in that**, if differences between coefficients of friction of a very large extent are present, the second operating mode (select high, SH) is selected, in particular for the front and rear axles of the vehicle.

6. Method according to Claim 1, **characterized in that** the selection of the operating modes is provided with hystereses.

7. Apparatus for setting the braking action in a vehicle having at least two wheels (120ij) arranged on at least one axle, to the right and left relative to the direction of travel, which wheels may have different coefficients of friction, said apparatus and having
- means (120ij) for sensing the movement behaviour of the wheels,
- means (115, 116) for the joint setting of the braking action at the two wheels,
- control means (140) for the formation of actuating signals (A1, A2) for actuating the means (140) for joint setting with at least two operating modes (SH, SL) which can be selected as a function of the prevailing coefficients of friction (µᵣ, µₗ) at the wheels and/or as a function of the vehicle speed (V), the joint setting taking place in a first selectable operating mode (select low, SL) as a function of the sensed movement behaviour of the wheel having the lower coefficient of friction, and the joint setting taking place in a second selectable operating mode (select high, SH) as a function of the sensed movement behaviour of the wheel having the higher coefficient of friction, the control means (140) being configured such that the extent of the differences between coefficients of friction at the at least two wheels (120ij) arranged on the right and left of an axle relative to the direction of travel is determined and an operating mode (SL, SH) is selected as a function of the extent of the differences between coefficients of friction,
**characterized in that**
the control means (140) are furthermore configured such that
- the extent of the prevailing coefficients of friction (µᵣ, µₗ) of the at least two wheels (120ij) arranged on an axle, to the right and left relative to the direction of travel is sensed and, if differences between coefficients of friction of a prescribably lesser extent are present, an operating mode (SL, SH) is selected as a function of the extent of the prevailing coefficients of friction (µᵣ, µₗ), and/or,
- if differences between coefficients of friction of a prescribably greater extent are present, an operating mode is selected as a function of the sensed vehicle speed (V).

8. Apparatus according to Claim 7, **characterized in that** the control means (140) are configured such that, if differences between coefficients of friction of a lesser extent are present and if relatively low coefficients of friction are present, the second operating mode (select high, SH) is selected, in particular for the front axle of the vehicle, and, if differences between coefficients of friction of a lesser extent are present and if relatively high coefficients of friction are present, the first operating mode (select low, SL) is selected, in particular for the front axle of the vehicle.

9. Apparatus according to Claim 7, **characterized in that** the control means (140) are configured such that, if differences between coefficients of friction of a greater extent are present and if relatively low vehicle speeds are present, the second operating mode (select high, SH) is selected, in particular for the front axle of the vehicle, and, if differences between coefficients of friction of a greater extent are present and if relatively high vehicle speeds are present, the first operating mode (select low, SL) is selected, in particular for the front axle of the vehicle.

10. Apparatus according to Claim 7, **characterized in that**, in order to determine the presence of differences between coefficients of friction of a lesser and/or greater extent, the following are provided:
- means (130ij) for sensing the rotational movement (Nij) of each wheel,
- means (140, 1401) for determining the coefficients of friction at the wheels at least as a function of the sensed wheel movements, in particular as a function of the maximum wheel decelerations derived from the sensed rotational movements, and
- means (140, 1402) for comparing the difference between the determined coefficients of friction of the left and right wheels with prescribable threshold values.

## Revendications

1. Procédé de réglage de l'action de freinage d'un véhicule, destiné à éviter la tendance au blocage à l'aide d'au moins deux roues (120ij) à droite et à gauche d'un essieu selon la direction de déplacement, ces roues roulant sur une chaussée ayant des coefficients d'adhérence différents (µᵣ, µₗ) et dont on saisit le comportement au mouvement; ainsi qu'un réglage commun (115, 116) de l'action de freinage sur les deux roues à l'aide de deux modes de fonctionnement (SL, SH) choisis en fonction des coefficients d'adhérence existant sur les roues et/ou en fonction de la vitesse du véhicule, selon lequel
dans un premier mode de fonctionnement choisi (select bas, SL) le réglage commun se fait en fonction du comportement de mouvement saisi de la roue ayant le coefficient d'adhérence le plus faible et dans un second mode de fonctionnement sélectionné (select haut, SH) le réglage commun se fait en fonction du comportement de mouvement saisi de la roue ayant le coefficient d'adhérence le plus élevé,
on détermine l'importance de la différence des coefficients d'adhérence entre au moins deux roues (120ij) à droite et à gauche d'un essieu par rapport à la direction de déplacement, et la sélection d'un mode de fonctionnement (SL, SH) se fait en fonction de l'importance de la différence de coefficients d'adhérence,
**caractérisé en ce que**
on saisit la mesure des coefficients d'adhérence présents (µᵣ, µₗ) d'au moins deux roues (120ij) à droite et à gauche d'un essieu dans la direction de déplacement, et en cas de différence de coefficients d'adhérence prédéterminée, de faible valeur, on choisit un mode de fonctionnement (SL, SH) en fonction de l'importance du coefficient d'adhérence présent (µᵣ, µₗ) et/ou
- pour des différences de coefficients d'adhérence d'amplitude importante, prédéterminée, le choix d'un mode de fonctionnement se fait en fonction de la vitesse saisie du véhicule (V).

2. Procédé selon la revendication 1,
**caractérisé en ce que**
pour des différences de coefficients d'adhérence de faible valeur et pour des coefficients d'adhérence réduits on choisit le second mode de fonctionnement (select haut, SH) notamment pour l'essieu avant du véhicule, et pour des différences de coefficients d'adhérence de faible valeur et pour des coefficients d'adhérence importants on choisit le premier mode de fonctionnement (select bas, SL) en particulier pour l'essieu avant du véhicule.

3. Procédé selon la revendication 1,
**caractérisé en ce que**
pour des différences de coefficients d'adhérence de grande importance et pour des vitesses de véhicule réduites on choisit le second mode de fonctionnement (select haut) en particulier pour l'essieu avant du véhicule et pour des différences de coefficients d'adhérence de grande importance et pour des vitesses de déplacement importantes (V) on choisit le premier mode de fonctionnement (select bas, SL) en particulier pour l'essieu avant du véhicule.

4. Procédé selon la revendication 1,
**caractérisé en ce qu'**
on détermine l'existence de différences de coefficients d'adhérence faible et/ou importante **en ce que**
- on saisit les mouvements de rotation (Nij) des roues (120ij),
- à partir des mouvements de roues saisis en particulier en fonction des décélérations maximales de roues déduites des mouvements de rotation saisis on détermine les coefficients d'adhérence au niveau des roues et
- on compare la différence des coefficients d'adhérence déterminée de la roue gauche et de la roue droite à des seuils prédéterminés.

5. Procédé selon la revendication 1,
**caractérisé en ce qu'**
en présence de différence de coefficients d'adhérence d'importance très grande on choisit le second mode de fonctionnement (select haut, SH) notamment pour l'essieu avant et l'essieu arrière du véhicule.

6. Procédé selon la revendication 1,
**caractérisé en ce que**
la sélection des modes de fonctionnement se fait avec hystéresis.

7. Dispositif pour régler l'action de freinage d'un véhicule ayant au moins deux roues (120ij) situées respectivement à droite et à gauche d'un essieu par rapport à la direction de déplacement et qui peuvent avoir des coefficients d'adhérence différents, ainsi que
- des moyens (120ij) pour saisir le comportement en mouvement des roues,
- des moyens (115, 116) pour régler en commun l'action de freinage sur les deux roues,
- des moyens de commande (140) pour former les signaux de commande (A1, A2) pour commander les moyens (140) de réglage en commun selon au moins deux modes de fonctionnement (SH, SL), choisis en fonction des coefficients d'adhérence présents (µᵣ, µₗ) des roues et/ou en fonction de la vitesse de roulage (V), de sorte que dans un premier mode de fonctionnement sélectionné (select bas SL) le réglage commun se fait en fonction du comportement de mouvement saisi de la roue ayant le coefficient d'adhérence le plus faible, et dans un second mode de fonctionnement sélectionné (select haut, SH) le réglage commun se fait en fonction du comportement de mouvement saisi de la roue ayant le coefficient d'adhérence le plus élevé, les moyens de commande (140) étant réalisés pour déterminer la valeur de la différence des coefficients d'adhérence entre au moins deux roues (120ij) à droite et à gauche de l'essieu selon la direction de déplacement et le choix d'un mode de fonctionnement (SL, SH) se faisant en fonction de l'importance de la différence des coefficients d'adhérence,
**caractérisé en ce que**
les moyens de commande (140) sont en outre réalisés de façon à
- saisir l'importance des coefficients d'adhérence présents (µᵣ, µₗ) d'au moins deux roues à droite et à gauche (120ij) d'un essieu par rapport à la direction de déplacement et en cas d'une différence des coefficients d'adhérence d'importance faible, prédéterminée, le choix d'un mode de fonctionnement (SL, SH) se fait en fonction de l'importance des coefficients d'adhérence présents (µᵣ, µₗ₎ et/ou
- pour des différences de coefficients d'adhérence d'amplitude importante prédéterminée, le choix d'un mode de fonctionnement se fait en fonction de la vitesse de roulage (V), saisie.

8. Dispositif selon la revendication 7,
**caractérisé en ce que**
les moyens de commande (140) sont réalisés de façon que pour des différences de coefficients d'adhérence de faible valeur et pour des coefficients d'adhérence réduits on choisit le second mode de fonctionnement (select haut, SH) notamment pour l'essieu avant du véhicule, et pour des différences de coefficients d'adhérence d'importance réduite et pour des coefficients d'adhérence importants on choisit le premier mode de fonctionnement (select bas, SL) notamment pour l'essieu avant du véhicule.

9. Dispositif selon la revendication 7,
**caractérisé en ce que**
les moyens de commande (140) sont réalisés de façon qu'en présence de différence de coefficients d'adhérence de valeur importante et pour des faibles vitesses de roulage du véhicule on choisit le second mode de fonctionnement (select haut, SH) notamment pour l'essieu avant du véhicule, et pour des différences de coefficients d'adhérence d'amplitude importante et pour des vitesses de roulage élevées on choisit le premier mode de fonctionnement (select bas, SL) notamment pour l'essieu avant du véhicule.

10. Dispositif selon revendication 7,
**caractérisé en ce que**
pour déterminer l'existence d'une différence de coefficients d'adhérence d'amplitude faible et/ou importante il comporte
- des moyens (130ij) pour saisir le mouvement de rotation Nij de chaque roue,
- des moyens (140, 1401) pour déterminer les coefficients d'adhérence des roues au moins en fonction des mouvements de roues saisis en particulier en fonction des décélérations maximales de roues déduites des mouvements de rotation saisis, et
- des moyens (140, 1402) pour comparer la différence des coefficients d'adhérence déterminés de la roue gauche et de la roue droite par rapport à des seuils prédéterminés.
